# EUROPÄISCHE PATENTSCHRIFT

(11) **EP 1 237 364 B1**
(45) Veröffentlichungstag und Bekanntmachung des Hinweises auf die Patenterteilung: **29.08.2012**
(21) Anmeldenummer: 02003629.9
(22) Anmeldetag: 16.02.2002
(51) Int. Cl.: H04N 5/44

(54) **Fernsehgerät**
Television apparatus
Appareil de télévision

(30) Priorität: 16.11.2001 DE 10156514; 01.03.2001 DE 10109926
(43) Veröffentlichungstag der Anmeldung: 04.09.2002
(73) Patentinhaber: Grundig Multimedia B.V., 1077 ZX Amsterdam (NL)
(72) Erfinder: Payer, Wolfgang, 91448 Emskirchen (DE); Finsterer, Harald, 90460 Nürnberg (DE)
(74) Vertreter: Louis Pöhlau Lohrentz

(56) Entgegenhaltungen:
- WO-A-98/36563
- WO-A1-00/69175
- GB-A- 2 176 637
- US-A- 4 315 276
- US-A- 5 233 423
- US-A- 5 430 493
- US-A- 5 907 321
- US-B1- 6 317 780
- PATENT ABSTRACTS OF JAPAN Bd. 2000, Nr. 19, 5. Juni 2001 (2001-06-05) & JP 2001 054088 A (MINOLTA CO LTD), 23. Februar 2001 (2001-02-23)
- PATENT ABSTRACTS OF JAPAN Bd. 1995, Nr. 09, 31. Oktober 1995 (1995-10-31) & JP 7 162773 A (SONY CORP), 23. Juni 1995 (1995-06-23)

## Beschreibung

Die Erfindung betrifft ein Fernsehgerät, welches ein Empfangsteil, einen Senderspeicher, eine Bildsignalverarbeitungsstufe, eine Bildanzeigeeinheit, eine Steuereinheit und eine Bedieneinheit aufweist.

Es sind bereits Fernsehgeräte bekannt, die einen Signalausfalldetektor aufweisen. Zeigt dessen Ausgangssignal an, dass ein Signalausfall vorliegt, dann wird ein Blausignal auf der Bildanzeigeeinheit dargestellt. Dies ist insbesondere dann vorteilhaft, wenn das Fernsehgerät im Schaufenster eines Gerätehändlers aufgestellt ist, da durch die Anzeige eines Blausignals anstelle eines rauschenden Bildes der auf den Betrachter einwirkende optische Eindruck verbessert ist.

Aus US-A-5,233,423 ist ein Femsehempfangsgerät offenbart, welches einen Speicher aufweist, in dem Daten, welche Werbebotschaften beinhalten, abgespeichert sind. Diese Werbebotschaften werden in Abhängigkeit von einer internen Schaltung bzw. einer internen Uhr auf das Fernsehgerät eingeblendet.

Die US 6,317,780 B1 beschreibt ein System und ein Verfahren zur Verteilung und zur Darstellung von Daten, wie zum Beispiel Werbebeiträge, von einem Host-Server zu einem Browser-Gerät in einem Kommunikationsnetzwerk. Das Browser-Gerät kann mittels eines ISDN-Modems mit dem Internet verbunden sein. Hierbei werden die Daten vorab auf das Browser-Gerät über das Kommunikationsnetzwerk übertragen und dort gespeichert. Während einer erkannten "idle-Zeit" werden diese Daten mittels des Browser-Gerätes dargestellt.

Weiterhin sind bereits Fernsehgeräte bekannt, bei welchen nach einem Einschalten bis zum Erreichen einer stabilen Bilddarstellung eine Dunkeltastung des Bildschirms oder die Einblendung eines geeignet gestalteten "Vorhanges" erfolgt.

Der Erfindung liegt die Aufgabe zugrunde, einen Weg aufzuzeigen, wie die Nutzungsmöglichkeiten eines Gerätes der Unterhaltungselektronik, insbesondere eines Fernsehgerätes, erweitert werden können.

Diese Aufgabe wird durch ein Gerät der Unterhaltungselektronik mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass ein mit den beanspruchten Merkmalen versehenes Gerät der Unterhaltungselektronik, insbesondere ein Fernsehgerät, nicht nur zum Empfang, zur Speicherung und zum Betrachten von über eine Rundfunkübertragungsstrecke übertragenen Fernsehsignalen benutzt werden kann, sondern auch zur Wiedergabe von intern abgespeicherten Einzelbildern, Bildsequenzen oder Videoclips. Bei diesen Einzelbildern handelt es sich vorzugsweise um für den Endverbraucher nützliche fernsehsenderunabhängige Informationen, die vom Gerätehersteller oder Händler eingespeichert wurden.

Außerdem besteht der Vorteil der Erfindung darin, dass ein mit den beanspruchten Merkmalen versehenes Gerät der Unterhaltungselektronik auch zum Erhalt von geldwerten Vorteilen verwendet werden kann. Zu diesem Zweck weist ein Gerät der Unterhaltungselektronik gemäß der Erfindung Zeiterfassungsmittel auf, die zur Erfassung der Darstellungszeit der Werbebeiträge auf der Bildanzeigeeinheit vorgesehen sind. Einem Fernsehzuschauer, der in Kauf nimmt, Werbebeiträge über eine vorgegebene Darstellungszeit zu betrachten, gegebenenfalls auch im Sinne von kurzzeitigen Unterbrechungen einer laufenden Fernsehsendung, können als geldwerte Vorteile beispielsweise Kaufrabatte, Gewährleistungsverlängerungen, Gebührenerstattungen oder eine Freischaltung eines vorgegebenen Fernsehkanals gegeben werden

Die Darstellung dieser Einzelbilder kann insbesondere dann erfolgen, wenn momentan keine Wiedergabe anderer Fernsehsignale möglich ist, beispielsweise bei Signalausfällen, beim Aufruf eines nicht mit Senderdaten belegten Programmplatzes oder während der Zeit des Hochfahrens des jeweiligen Fernsehgerätes.

Gemäß einer vorteilhaften Weiterbildung der Erfindung können die fernsehsenderunabhängigen Informationen auch aus dem Internet geladen werden. Dies kann nach dem Aufbau einer Internetverbindung automatisch oder als Folge einer Betätigung der Bedientastatur erfolgen. Vorzugsweise besteht für den Benutzer auch die Möglichkeit, aus einer Vielzahl von im Internet angebotenen Informationsseiten eine oder mehrere auszuwählen. Dies kann unter Verwendung einer empfängerseitig generierten Menüseite geschehen.

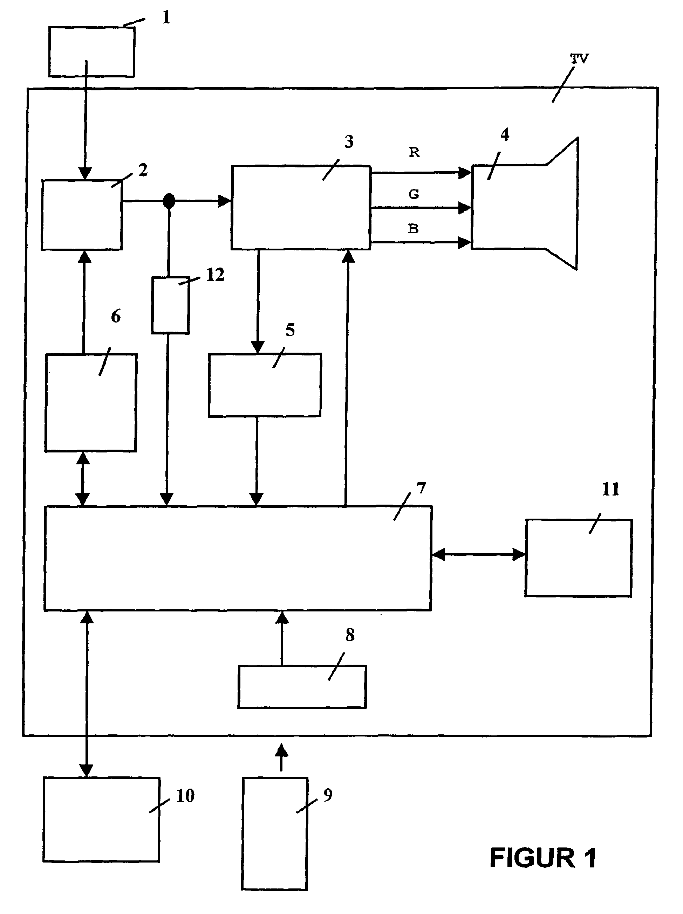

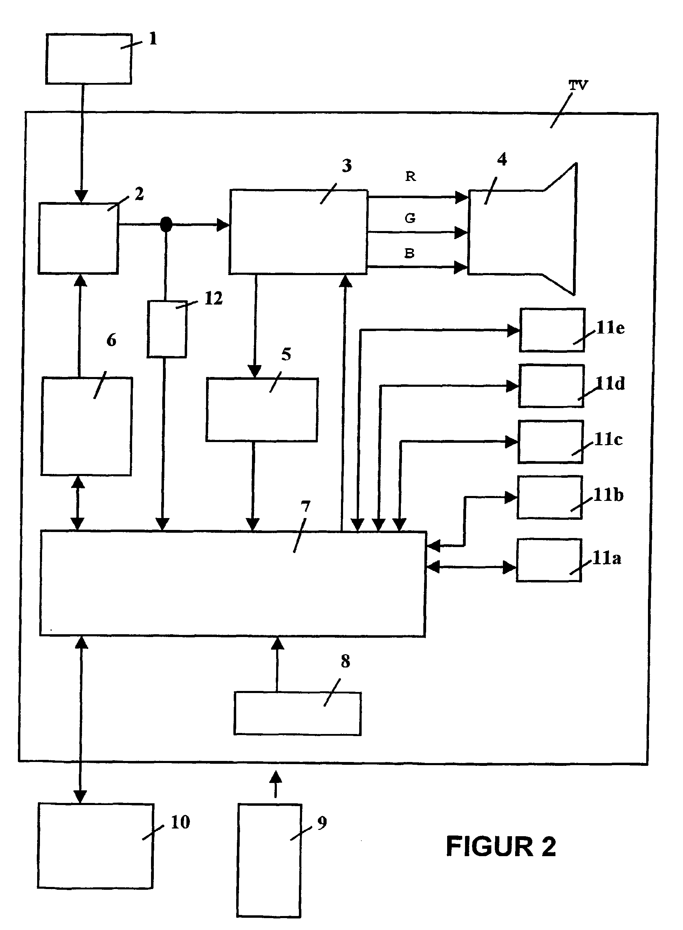

Weitere vorteilhafte Eigenschaften der Erfindung ergeben sich aus der nachfolgenden Erläuterung zweier Ausführungsbeispiels anhand der Figuren 1 und 2.

Figur 1 zeigt ein Blockschaltbild eines erfindungsgemäßen Gerätes der Unterhaltungselektronik anhand eines Fernsehgerätes TV. Dieses ist an eine Antenne 1 angeschlossen und steht weiterhin mit einer ISDN-Telefonleitung 10 in Verbindung. Zur Bedienung des Fernsehgerätes TV ist ein Fernbedienungsgeber 9 vorgesehen. Die von diesem ausgestrahlten Infrarot-Bedienbefehle werden von einem Fernbedienempfänger 8 empfangen und von dort aus an die als Mikrocomputer realisierte Steuereinheit 7 weitergeleitet.

Aus den von der Antenne 1 abgeleiteten Fernsehsignalen, die unter anderem die Bildsignale einer Vielzahl von Fernsehsendungen umfassen, wird mittels der Empfangseinheit 2 eine Fernsehsendung ausgewählt und in Form eines FBAS-Signals am Ausgang der Empfangseinheit zur Verfügung gestellt. Dieses FBAS-Signal wird an eine Bildsignalverarbeitungseinheit 3 und an eine Synchronsignalabtrennstufe 12 weitergeleitet.

In der Synchronsignalabtrennstufe 12 werden die Synchronsignale SY aus dem FBAS-Signal abgetrennt und an die Steuereinheit 7 weitergeleitet. Die am Ausgang der Empfangseinheit zur Verfügung gestellten FBAS-Signale werden in der Bildsignalverarbeitungseinheit 3 aufbereitet und in R, G, B-Signale umgewandelt. Diese werden einer Bildanzeigeeinheit 4 zugeführt und dort dargestellt.

Weiterhin weist die gezeigte Vorrichtung einen Senderspeicher 6 auf, in welchem eine Vielzahl von Fernsehsendern zugeordnete Sender- bzw. Empfangsdaten abgespeichert sind. Diese können durch einen mittels der Fernbedieneinheit im Sinne einer Umschaltung auf einen gewünschten Sender eingegebenen Befehl unter Steuerung durch die Steuereinheit 7 aus dem Senderspeicher 6 ausgelesen und zur Abstimmung der Empfangseinheit 2 auf den gewünschten Sender verwendet werden. Die von den Geräteherstellern heute üblicherweise eingebauten Senderspeicher haben eine so große Speicherkapazität, dass im allgemeinen eine Vielzahl von Speicherplätzen des Senderspeichers nicht mit Empfangsdaten von Sendern belegt ist.

Ferner ist ein erfindungsgemäßes Fernsehgerät mit einem Signalausfalldetektor versehen. Dieser kann von der Steuereinheit 7 selbst gebildet sein, die anhand des Vorliegens oder Fehlens von Synchronimpulsen erkennt, ob ein Signalausfall vorliegt oder nicht. Alternativ dazu oder zusätzlich kann ein eigener Signalausfalldetektor 5 vorgesehen sein, der mit der Bildsignalverarbeitungseinheit 3 in Verbindung steht und das Vorliegen eines Signalausfalls anhand der in der Bildsignalverarbeitungseinheit vorliegenden Bildsignale detektiert.

Die Steuereinheit 7 steht weiterhin in Verbindung mit einem nichtflüchtigen Speicher 11 des Fernsehgerätes TV. In diesem Speicher sind fernsehsenderunabhängigen Einzelbildern entsprechende Daten abgespeichert, d. h. Daten, die nicht über das Empfangsteil 2 empfangen wurden und auch nicht von einem externen Videorecorder oder einem externen Bildplattenspieler abgleitet sind.

Diese fernsehsenderunabhängigen Daten wurden vorzugsweise bereits bei der Herstellung des Fernsehgerätes im Werk im Speicher 11 nichtflüchtig abgespeichert. Sie enthalten in diesem Fall beispielsweise das Logo des Herstellers, ein Service-Händlerverzeichnis, Kontaktadressen des Geräteherstellers, Informationen über die Herstellerfirma und/oder Informationen über die Produktpalette des Geräteherstellers.

Alternativ oder zusätzlich dazu können auch vom Händler des Gerätes fernsehsenderunabhängige Daten im Speicher 11 des Fernsehgerätes nichtflüchtig abgespeichert werden. Dabei kann es sich um händlerspezifische Informationen handeln wie die Kontaktadresse des Händlers, die vom Händler angebotene Produktpalette und/oder um Informationen über die Serviceleistungen des Händlers.

Weiterhin können alternativ oder zusätzlich dazu auch Informationen und/oder Werbungsseiten von anderen, am Verkaufsort des Fernsehgerätes ansässigen Firmen und Behörden im Speicher 11 abgespeichert werden, beispielsweise Informationen über lokale Zeitungen, lokale Kfz-Händler und Kfz-Werkstätten, lokale Lebensmittelhändler, lokale Verbrauchermärkte, kommunale Informationen, etc.

Der Speicher 11 kann als ROM ausgebildet sein. In diesem Fall ist sein Inhalt fest vorgegeben und nicht veränderbar. Vorzugsweise handelt es sich beim Speicher 11 jedoch um ein RAM, einen Flash-Speicher oder - insbesondere für größere Datenmengen - einen Festplattenspeicher. Bei diesen Speichern können die abgespeicherten Daten bei Bedarf aktualisiert werden, beispielsweise bei jeder Reparatur des Gerätes durch den Service-Händler. So kann der Händler über die für einen Software-Update des Gerätes notwendige Flash-Ladestation seine individuellen Informations- und Werbeinhalte, z. B. eine persönliche Kundenbegrüßung, im Speicher 11 des Gerätes 11 hinterlegen.

Die Anzeige dieser Informationen erfolgt gemäß einer ersten Ausführungsform der Erfindung in Ansprache auf einen mittels der Fernbedienung 9 eingegebenen Bedienbefehl. Vorzugsweise weist die Fernbedienung 9 weiterhin Tasten auf, beispielsweise +/- -Tasten, mittels derer zwischen einer Vielzahl von abgespeicherten Informations- und Werbungsseiten umgeblättert werden kann.

Gemäß einer anderen Ausführungsform der Erfindung erfolgt eine Anzeige der abgespeicherten Informations- und Werbungsseiten dann automatisch, wenn mittels der Steuereinheit 7 oder des Signalausfalldetektors 5 Signalausfälle detektiert werden. Durch die Anzeige abgespeicherter Informations- und Werbungsseiten wird, wenn Signalausfälle vorliegen, in vorteilhafter Weise erreicht, dass während der Signalausfallzeiten kein rauschendes, unruhiges Bild zu sehen ist. Dies ist insbesondere dann von Vorteil, wenn das Fernsehgerät im eingeschalteten Zustand in einem Ausstellungsraum oder einem Schaufenster aufgestellt ist.

Gemäß einer weiteren Ausführungsform der Erfindung erfolgt eine Anzeige der abgespeicherten Informations- und Werbungsseiten dann automatisch, wenn der Benutzer wissentlich oder versehentlich einen nicht mit Programmdaten belegten Speicherplatz des Senderspeichers 6 anwählt. Auch in diesem Falle wird vermieden, dass auf dem Bildschirm des Fernsehgerätes ein rauschendes, unruhiges Bild zu sehen ist.

Ferner können die abgespeicherten Informations- und Werbungsseiten auch während des Hochlaufens des Fernsehgerätes nach dessen Einschalten angezeigt werden. Moderne Fernsehgeräte benötigen mehrere Sekunden, bis eine stabile Bildwiedergabe möglich ist, da der Bildschirm eine Vorwärmzeit benötigt und das Fernsehgerät erst mit einem empfangenen Signal synchronisiert werden muss. Die Zeit bis zum Erreichen dieses stabilen Zustandes kann in vorteilhafter Weise dazu verwendet werden, eine abgespeicherte Informationsseite anzuzeigen, beispielsweise eine herstellerspezifische Informationsseite. Dadurch wird der Einschaltvorgang des Gerätes optisch erträglicher und informativer gestaltet.

Eine vorteilhafte Weiterbildung der Erfindung besteht darin, den Internet-Anschluss 10 des jeweiligen Fernsehgerätes TV dazu zu verwenden, aus dem Internet Informations- und/oder Werbeseiten herunterzuladen und im Speicher 11 nichtflüchtig abzuspeichern. Die über die ISDN-Leitung der Steuereinheit 7 zugeführten HTML-Seiten werden von der Steuereinheit 7 umcodiert und in den Speicher 11 übertragen. Von dort können sie - wie oben beschrieben wurde - abgerufen und auf dem Bildschirm 4 dargestellt werden.

Das Herunterladen von neuen Informations- und Werbeseiten aus dem Internet kann automatisch stets dann erfolgen, wenn eine Internetverbindung aufgebaut ist. Alternativ dazu erfolgt mittels des Fernbedienungsgebers 9 eine Anwahl der jeweiligen, die Informations- und Werbeseiten enthaltenden Internetadresse und eine ebenfalls mittels des Fernbedienungsgebers 9 gesteuerte Auswahl der herunterzuladenden Daten. Diese Auswahl wird vorzugsweise durch eine auf dem Bildschirm des Fernsehgerätes dargestellte Menüseite unterstützt.

Die Vorteile einer Ableitung der im Speicher 11 abgespeicherten Informationsund Werbeseiten aus dem Internet besteht darin, dass diese Seiten stets aktuell sind. Dies eröffnet den oben genannten Geschäftsleuten und Behörden die Möglichkeit, die Endverbraucher ohne Zeitverzögerung über aktuelle Themen zu unterrichten.

FIGUR 2 zeigt ein weiteres Blockschaltbild eines erfindungsgemäßen Gerätes der Unterhaltungselektronik anhand eines Fernsehgerätes TV, welches an eine Antenne 1 angeschlossen ist und weiterhin mit einer ISDN-Telefonleitung 10 in Verbindung steht. Zur Bedienung des Fernsehgerätes TV ist ein Fernbedienungsgeber 9 vorgesehen. Die von diesem ausgestrahlten Infrarot-Bedienbefehle werden von einem Fernbedienempfänger 8 empfangen und von dort aus an die als Mikrocomputer realisierte Steuereinheit 7 weitergeleitet.

Aus den von der Antenne 1 abgeleiteten Fernsehsignalen, die unter anderem die Bildsignale einer Vielzahl von Fernsehsendungen umfassen, wird mittels der Empfangseinheit 2 eine Fernsehsendung ausgewählt und die dieser entsprechenden Signale in Form eines FBAS-Signals am Ausgang der Empfangseinheit zur Verfügung gestellt. Dieses FBAS-Signal wird an eine Bildsignalverarbeitungseinheit 3 und an eine Synchronsignalabtrennstufe 12 weitergeleitet.

In der Synchronsignalabtrennstufe 12 werden die Synchronsignale aus dem FBAS-Signal abgetrennt und an die Steuereinheit 7 weitergeleitet. Die am Ausgang der Empfangseinheit zur Verfügung gestellten FBAS-Signale werden in der Bildsignalverarbeitungseinheit 3 aufbereitet und in R, G, B-Signale umgewandelt. Diese werden einer Bildanzeigeeinheit 4 zugeführt und dort dargestellt.

Weiterhin weist die gezeigte Vorrichtung einen Senderspeicher 6 auf, in welchem eine Vielzahl von Fernsehsendern zugeordnete Sender- bzw. Empfangsdaten abgespeichert sind. Diese können durch einen mittels der Fernbedieneinheit im Sinne einer Umschaltung auf einen gewünschten Sender eingegebenen Befehl unter Steuerung durch die Steuereinheit 7 aus dem Senderspeicher 6 ausgelesen und zur Abstimmung der Empfangseinheit 2 auf den gewünschten Sender verwendet werden. Die von den Geräteherstellern heute üblicherweise eingebauten Senderspeicher haben eine so große Speicherkapazität, dass im allgemeinen eine Vielzahl von Speicherplätzen des Senderspeichers nicht mit Empfangsdaten von Sendern belegt ist.

Ferner ist das gezeigte Fernsehgerät mit einem Signalausfalldetektor versehen. Dieser kann von der Steuereinheit 7 selbst gebildet sein, die anhand des Vorliegens oder Fehlens von Synchronimpulsen erkennt, ob ein Signalausfall vorliegt oder nicht. Alternativ dazu oder zusätzlich kann ein eigener Signalausfalldetektor 5 vorgesehen sein, der mit der Bildsignalverarbeitungseinheit 3 in Verbindung steht und das Vorliegen eines Signalausfalls anhand der in der Bildsignalverarbeitungseinheit vorliegenden Bildsignale detektiert.

Die Steuereinheit 7 steht weiterhin in Verbindung mit nichtflüchtigen Speichern 11a - 11e des Fernsehgerätes TV. Im Speicher 11a sind Daten abgespeichert, die Werbebeiträgen entsprechen und in Form von Einzelbildern vorliegen.

Diese Daten wurden vorzugsweise bereits bei der Herstellung des Fernsehgerätes im Werk im Speicher 11a nichtflüchtig abgespeichert. Sie enthalten das Logo des Herstellers, ein Service-Händlerverzeichnis, Kontaktadressen des Geräteherstellers, Informationen über die Herstellerfirma und/oder Informationen über die Produktpalette des Geräteherstellers.

Alternativ oder zusätzlich dazu können auch vom Händler des Gerätes Werbebeiträgen entsprechende Daten im Speicher 11a des Fernsehgerätes nichtflüchtig abgespeichert werden. Dabei kann es sich um händlerspezifische Informationen handeln wie die Kontaktadresse des Händlers, die vom Händler angebotene Produktpalette und/oder um Informationen über die Serviceleistungen des Händlers.

Weiterhin können alternativ oder zusätzlich dazu auch Informationen und/oder Werbungsseiten von anderen, am Verkaufsort des Fernsehgerätes ansässigen Firmen und Behörden im Speicher 11 a abgespeichert werden, beispielsweise Informationen über lokale Zeitungen, lokale Kfz-Händler und Kfz-Werkstätten, lokale Lebensmittelhändler, lokale Verbrauchermärkte, kommunale Informationen, etc.

Der Speicher 11a kann als ROM ausgebildet sein. In diesem Fall ist sein Inhalt fest vorgegeben und nicht veränderbar. Vorzugsweise handelt es sich beim Speicher 11a jedoch um ein RAM, einen Flash-Speicher oder - insbesondere für größere Datenmengen - einen Festplattenspeicher. Bei diesen Speichern können die abgespeicherten Daten bei Bedarf aktualisiert werden, beispielsweise bei jeder Reparatur des Gerätes durch den Service-Händler. So kann der Händler über die für einen Software-Update des Gerätes notwendige Flash-Ladestation seine individuellen Informations- und Werbeinhalte, z. B. eine persönliche Kundenbegrüßung, im Speicher 11a des Gerätes TV hinterlegen.

Die Anzeige dieser Informationen auf der Bildanzeigeeinheit 4 erfolgt nach Eingabe eines mittels der Fernbedienung 9 eingegebenen Bedienbefehls. Vorzugsweise weist die Fernbedienung 9 weiterhin Tasten auf, beispielsweise +/- -Tasten, mittels derer zwischen einer Vielzahl von abgespeicherten Informations- und Werbungsseiten umgeblättert werden kann. Eine Betriebsart kann auch in einer Endlos-Wiedergabe der abgespeicherten Informations- und Werbungsseiten bestehen. Diese Betriebsart ist vor allem dann vorteilhaft, wenn das Fernsehgerät in einem Schaufenster aufgestellt ist.

Weiterhin erfolgt eine Anzeige der abgespeicherten Werbungsseiten dann automatisch, wenn mittels der Steuereinheit 7 oder des Signalausfalldetektors 5 Signalausfälle detektiert werden. Durch die Anzeige abgespeicherter Werbungsseiten wird dann, wenn Signalausfälle vorliegen, in vorteilhafter Weise erreicht, dass während der Signalausfallzeiten kein rauschendes, unruhiges Bild zu sehen ist. Dies ist insbesondere dann von Vorteil, wenn das Fernsehgerät im eingeschalteten Zustand in einem Ausstellungsraum oder einem Schaufenster aufgestellt ist.

Ferner erfolgt eine Anzeige der abgespeicherten Werbungsseiten auch dann automatisch, wenn der Benutzer wissentlich oder versehentlich einen nicht mit Programmdaten belegten Speicherplatz des Senderspeichers 6 anwählt. Auch in diesem Falle wird vermieden, dass auf dem Bildschirm des Fernsehgerätes ein rauschendes, unruhiges Bild zu sehen ist.

Ferner können die abgespeicherten Werbungsseiten auch während des Hochlaufens des Fernsehgerätes nach dessen Einschalten automatisch angezeigt werden. Moderne Fernsehgeräte benötigen mehrere Sekunden, bis eine stabile Bildwiedergabe möglich ist, da der Bildschirm eine Vorwärmzeit benötigt und das Fernsehgerät erst mit einem empfangenen Signal synchronisiert werden muss. Die Zeit bis zum Erreichen dieses stabilen Zustandes kann in vorteilhafter Weise dazu verwendet werden, eine abgespeicherte Werbungsseite anzuzeigen, beispielsweise eine herstellerspezifische Werbungsseite. Dadurch wird der Einschaltvorgang des Gerätes optisch erträglicher und informativer gestaltet.

Die ISDN-Telefonleitung 10 des gezeigten Fernsehgerätes TV wird dazu verwendet, aus dem Internet Werbeseiten herunterzuladen und im Speicher 11a nichtflüchtig abzuspeichern. Die über die ISDN-Leitung der Steuereinheit 7 zugeführten HTML-Seiten werden von der Steuereinheit 7 umcodiert und in den Speicher 11a übertragen. Von dort können sie - wie oben beschrieben wurde - abgerufen und auf der Bildanzeigeeinheit 4 dargestellt werden.

Zu einem Herunterladen von neuen Werbeseiten aus dem Internet erfolgt mittels des Fernbedienungsgebers 9 eine Anwahl der jeweiligen, die Werbeseiten enthaltenden Internetadresse und eine ebenfalls mittels des Fernbedienungsgebers 9 gesteuerte Auswahl der herunterzuladenden Daten. Diese Auswahl wird vorzugsweise durch eine auf der Anzeigeeinheit des Fernsehgerätes dargestellte Menüseite unterstützt.

Die Vorteile einer Ableitung der im Speicher 11a abgespeicherten Werbeseiten aus dem Internet bestehen darin, dass diese Seiten stets aktuell sind. Dies eröffnet den oben genannten Geschäftsleuten und Behörden die Möglichkeit, die Endverbraucher ohne Zeitverzögerung über aktuelle Themen zu unterrichten.

Gemäß der vorliegenden Erfindung wird der Fernsehzuschauer für seine Bereitschaft, zusätzliche Werbung auch während laufender Fernsehsendungen zu betrachten, durch geldwerte Vorteile belohnt. Diese geldwerten Vorteile bestehen beispielsweise darin, dem Fernsehzuschauer Kaufrabatte einzuräumen, eine Garantiezeitverlängerung zu gewähren, Gebühren, beispielsweise Fernsehgebühren, zu erstatten oder einen bestimmten Fernsehkanal freizuschalten.

Gemäß einer ersten Ausführungsform der Erfindung werden entweder vom Gerätehersteller oder vom Gerätehändler in einem nichtflüchtigen Speicher 11b des Fernsehgerätes die Werbungseinblendung beeinflussende Steuerdaten abgelegt. Zu diesen Steuerdaten gehören Informationen über die Zeitpunkte und die Zeitdauer von Werbeeinblendungen, die ihrerseits im nichtflüchtigen Speicher 11a hinterlegt werden. Die Zeitdauer einer Werbeeinblendung kann beispielsweise 30 Sekunden betragen. Die Zeitpunkte der Werbeeinblendung bzw. die Zeitabstände zwischen aufeinanderfolgenden Werbeeinblendungen können 30 Minuten sein. Die Einblendung der Werbung erfolgt entweder anstelle des Fernsehbildes, so dass für den Fernsehzuschauer die laufende Fernsehsendung für eine Dauer von 30 Sekunden unterbrochen wird, oder in Form einer Einblendung in das laufende Fernsehbild.

Weiterhin wird bei dieser ersten Ausführungsform der Erfindung vom Gerätehersteller oder Händler im Speicher 11b auch eine Information über ein Sollzeitintervall abgelegt, welches der Soll-Gesamtdarstellungszeit der Werbeeinblendung auf der Bildanzeigeeinheit 4 entspricht. Dieses Sollzeitintervall wird während des Gerätebetriebes mit einem Istzeitintervall verglichen, welches einem aufsummierten Wert der bisherigen Ist-Darstellungszeiten der Werbeeinblendungen entspricht. Zur Erfassung der Ist-Darstellungszeiten sind Zeiterfassungsmittel vorgesehen, die beim gezeigten Ausführungsbeispiel von der Steuereinheit 7 gebildet werden. Der aufsummierte Wert für die Ist-Darstellungszeiten der Werbeeinblendungen wird im nichtflüchtigen Speicher 11c abgespeichert und wird beim bzw. nach dem Betrachten einer Werbeeinblendung ständig aktualisiert.

Erreicht der aufsummierte Wert der Ist-Darstellungszeiten der Werbeeinblendungen die Soll-Gesamtdarstellungszeit, dann hat der Fernsehzuschauer seine Gegenleistung für den ihm gewährten geldwerten Vorteil erbracht und eine Einblendung von Werbebeiträgen erfolgt nur noch beim Hochlauf des Gerätes, bei Senderausfällen und bei einer Anwahl nicht belegter Programmplätze und nicht mehr im Sinne einer Unterbrechung laufender Fernsehsendungen.

Gemäß einer zweiten Ausführungsform der Erfindung ist eine Überwachung des aufsummierten Wertes der Ist-Darstellungszeiten der Werbeeinblendungen durch den Werbungsanbieter vorgesehen. Bei diesem Werbungsanbieter handelt es sich um eine beliebige Firma, deren Werbeseiten im nichtflüchtigen Speicher 11a abgespeichert sind.

Zur Durchführung der genannten Überwachung, die über das Internet erfolgt, ist im nichtflüchtigen Speicher 11 b die Internetadresse des Werbungsanbieters abgespeichert. Nach dem Einschalten des Fernsehgerätes TV durch Betätigung des Einschaltknopfes oder einer Taste des Fernbedienungsgebers 9 initiiert die Steuereinheit 7 automatisch unter Verwendung der abgespeicherten Internetadresse den Aufbau einer Internetverbindung über die ISDN-Telefonleitung 10 zum Werbungsanbieter. Ist die Internetverbindung aufgebaut, dann erfolgt eine Übertragung, in einer vorteilhaften Ausgestaltung der Erfindung eine verschlüsselte Übertragung, des im Speicher 11c abgespeicherten aufsummierten Wertes der Ist-Darstellungszeiten zusammen mit einer Geräte-Identifikationsnummer, die im nichtflüchtigen Speicher 11d abgespeichert ist, zum Werbungsanbieter. Dieser überprüft anhand des übertragenen aufsummierten Wertes der Ist-Darstellungszeiten, ob der Fernsehzuschauer seinen Verpflichtungen, Werbebeiträge in einem bestimmten Umfang zu konsumieren, nachkommt oder nicht. Kommt der Fernsehzuschauer diesen Verpflichtungen nicht nach, dann werden ihm gewährte geldwerte Vorteile gestrichen, beispielsweise eine Erstattung von Fernsehgebühren oder eine Freischaltung eines gebührenpflichtigen Fernsehkanals. Kommt der Fernsehzuschauer seinen Verpflichtungen nach, dann werden ihm die Vergünstigungen weiterhin gewährt.

Weiterhin können bei dieser Ausführungsform, bei welcher das Fernsehgerät TV mit dem Werbungsanbieter online in Verbindung steht, automatisch aktualisierte Werbeseiten in das Fernsehgerät übertragen und dort im nichtflüchtigen Speicher 11a abgespeichert werden. Diese aktualisierten Werbeseiten enthalten aktuelle Informationen des Werbungsanbieters, beispielsweise Hinweise auf gültige Sonderangebote, aktuelle Veranstaltungen, Adressenänderungen oder Hinweise auf die Eröffnung einer neuen Filiale.

Ferner können bei dieser Ausführungsform, bei welcher das Fernsehgerät TV mit dem Werbungsanbieter online in Verbindung steht, automatisch Softwareprogramme in das Fernsehgerät geladen werden, mittels derer dort die Steuerung und Überwachung der Werbungseinblendungen vorgenommen wird.

Gemäß einer dritten Ausführungsform der Erfindung werden die Werbungsinhalte zusammen mit einem Fernsehsignal zu den Fernsehzuschauern übertragen, können jedoch nur bei registrierten Kunden auf dem Bildschirm gezeigt werden. Diese Übertragung im Fernsehsignal kann beim Vorliegen eines analogen Fernsehsignals ähnlich einem Videotextsignal in reservierten Zeilen der Vertikalaustastlücken erfolgen. Auf diese reservierten Zeilen der Vertikalaustastlücken haben nur registrierte Kunden Zugriff. Die Registrierung der Kunden kann dabei über Telefon oder Internet erfolgen. Die Steuerung und Überwachung des Werbekonsums erfolgt über die Software des jeweiligen Fernsehgerätes in Verbindung mit einer Zusatz-Software, die vom jeweiligen Werbetreibenden dem Endverbraucher entweder über das Internet oder mittels eines in das Fernsehgerät ladbaren Datenträgers zur Verfügung gestellt wird, beispielsweise einer CD-ROM oder einer DVD.

Beim Vorliegen eines digitalen Fernsehsignals werden die Werbungsinhalte in Form von digitalen Datenpaketen, die im Zeitmultiplex mit den Datenpaketen des Fernsehsignals übertragen werden, zum Endverbraucher übertragen.

Gemäß einer vierten Ausführungsform der Erfindung erfolgt eine Auswahl und Abwahl von Werbeanbietern seitens des Kunden über das Internet, über welches die Fernsehzuschauer Zugriff zu einer Website haben, die eine übersicht über die in Frage kommenden Werbeanbieter, deren Werbedaueranspruch und die von diesen angebotenen geldwerten Vorteile enthält. Die Registrierung eines Kunden erfolgt in diesem Fall unter Angabe der jeweiligen Geräte-Identifikationsnummer, die zur Verifizierung eines automatischen Herunterladens der Werbeinhalte dient. Das die heruntergeladenen Daten empfangende Fernsehgerät quittiert den Empfang der Daten mit seiner Identifikationsnummer, so dass der Werbeanbieter sicher sein kann, den jeweiligen Konsumenten mit seiner Werbung zu erreichen. Mit der Registrierung und dem ersten Herunterladen von Werbedaten erhält das jeweilige Fernsehgerät auch die Internetadresse des Werbeanbieters, unter welcher künftig aktualisierte Werbedaten abzuholen sind. Die genannte Internetadresse, der Werbedaueranspruch des jeweiligen Werbungsanbieters und die Werbeinhalte werden wie bei den obigen Ausführungsbeispielen nichtflüchtig im Fernsehgerät TV abgespeichert.

Alternativ zu der oben beschriebenen automatischen Herstellung einer Internetverbindung nach jedem Einschalten des Fernsehgerätes kann auch eine tägliche, wöchentliche oder monatliche Herstellung einer Internetverbindung mit dem Werbeanbieter vorgesehen sein.

Um sicherzustellen, dass der Fernsehzuschauer auch tatsächlich die einmal vereinbarten Werbezeitdauern und Werbezeitpunkte einhält, besteht für ihn keine Möglichkeit, mittels der Bedieneinheit des Gerätes die automatisch erfolgende Übertragung von Daten zwischen dem Fernsehgerät und dem Werbungsanbieter zu unterbrechen und auch keine Möglichkeit, die einmal vereinbarten oder vorgegebenen Werbevertragsbedingungen selbstständig abzuändern. Ein eventueller Wechsel des Speichermediums, auf welchem die Vertragsdaten (Konsumdauer, Konsumzeitpunkte, ...) gespeichert sind, wird vom Werbetreibenden nach Aufbau der automatischen Internetverbindung erkannt. Der Werbetreibende kann dann gegebenenfalls gegenüber dem Verbraucher geeignete Maßnahmen ergreifen, wenn dies notwendig ist.

## Patentansprüche

1. Gerät der Unterhaltungselektronik, welches ein Empfangsteil (2), einen Senderspeicher (6), eine Bildsignalverarbeitungsstufe (3), eine Steuereinheit (7), eine Bedieneinheit (9) und einen nichtflüchtigen Speicher (11, 11a, 11b) aufweist, in welchem fernsehsenderunabhängige Daten abgespeichert sind,
der zur Abspeicherung von Informationen über Werbungsdarstellungs-Zeitintervalle dient und/oder die Informationen über die Werbungsdarstellungs-Zeitintervalle eine Information über eine Zeitdauer enthalten, für welche eine Werbungsdarstellung auf einer Bildanzeigeeinheit (4) erfolgt dass der nichtflüchtige Speicher nichtflüchtige Speicher zur Abspeicherung einer Information über ein Sollzeitintervall vorgesehen ist, welches einer Soll-Gesamtdarstellungszeit der Werbebeiträge auf der Bildanzeigeeinheit (4) und/oder der zur Abspeicherung einer Online-Adresseninformation eines Werbungsanbieters vorgesehen ist, und **dadurch gekennzeichnet, dass** der zur Abspeicherung eines aufsummierten Wertes der mittels der Zeiterfassungsmittel (7) erfassten Ist-Darstellungszeit der Werbebeiträge vorgesehen ist, dass die Steuereinheit (7) zum Vergleichen der dem Sollzeitintervall entsprechenden Information mit der dem aufsummierten Wert der Ist-Darstellungszeit entsprechenden Information vorgesehen ist und dann, wenn der aufsummierte Wert der Ist-Darstellungszeit größer oder gleich dem Sollzeitintervall ist, die Information über die Werbungsdarstellungs-Zeitintervalle löscht.

2. Gerät der Unterhaltungselektronik nach Anspruch 1,
**dadurch gekennzeichnet, dass**
es eine Bildanzeigeeinheit aufweist oder an eine Bildanzeigeeinheit anschließbar ist.

3. Gerät der Unterhaltungselektronik nach Anspruch 1 oder 2,
**dadurch gekennzeichnet, dass**
es weiterhin Zeiterfassungsmittel (7) aufweist, die zur Erfassung der Darstellungszeit der Werbebeiträge auf der Bildanzeigeeinheit (4) vorgesehen sind.

4. Gerät der Unterhaltungselektronik nach einem der vorhergehenden Ansprüche,
**dadurch gekennzeichnet, dass**
der nichtflüchtige Speicher (11, 11a) ein ROM, ein RAM, ein Flash-Speicher oder ein Festplattenspeicher ist.

5. Gerät der Unterhaltungselektronik nach einem der vorhergehenden Ansprüche,
**dadurch gekennzeichnet, dass**
es einen Signalausfalldetektor (5) aufweist und die Steuereinheit (7) bei erkanntem Signalausfall ein Auslesen von Daten aus dem nichtflüchtigen Speicher (11) und deren Darstellung auf der Bildanzeigeeinheit (4) steuert und/oder die Steuereinheit (7) beim Erkennen einer Anwahl eines nicht mit Senderdaten belegten Programmplatzes des Senderspeichers (6) ein Auslesen von Daten aus dem nichtflüchtigen Speicher (11, 11a) und deren Darstellung auf der Bildanzeigeeinheit (4) steuert.

6. Gerät der Unterhaltungselektronik nach einem der vorhergehenden Ansprüche,
**dadurch gekennzeichnet, dass**
die Steuereinheit (7) nach dem Erkennen eines Einschaltbefehls ein Auslesen von Daten aus dem nichtflüchtigen Speicher (11, 11a) und deren Darstellung auf der Bildanzeigeeinheit (4) steuert.

7. Gerät der Unterhaltungselektronik nach einem der vorhergehenden Ansprüche,
**dadurch gekennzeichnet, dass**
die aus dem Internet abgeleiteten Daten nach dem Aufbau einer Internetverbindung automatisch aktualisiert werden.

8. Gerät der Unterhaltungselektronik nach einem der vorhergehenden Ansprüche,
**dadurch gekennzeichnet, dass**
die aus dem Internet abgeleiteten Daten erst nach Eingabe eines Bedienbefehls mittels der Bedieneinheit (8, 9) aktualisiert werden.

9. Gerät der Unterhaltungselektronik nach einem der vorhergehenden Ansprüche,
**dadurch gekennzeichnet, dass**
die Bedieneinheit (8, 9) Bedienelemente aufweist, mittels derer ein Blättern zwischen den abgespeicherten, Einzelbildern entsprechenden Daten durchführbar ist.

10. Gerät der Unterhaltungselektronik nach einem der vorhergehenden Ansprüche,
**dadurch gekennzeichnet, dass**
die Informationen über die Werbungsdarstellungs-Zeitintervalle eine Information über Zeitabstände zwischen aufeinanderfolgenden Werbungsdarstellungen auf der Bildanzeigeeinheit (4) enthalten.

11. Gerät der Unterhaltungselektronik nach einem der vorhergehenden Ansprüche,
**dadurch gekennzeichnet, dass**
die Steuereinheit (7) dazu vorgesehen ist, nach dem Erkennen eines Einschaltbefehls oder in regelmäßigen Zeitabständen automatisch den Aufbau einer Internetverbindung über die ISDN-Telefonleitung (10) zu initiieren.

12. Gerät der Unterhaltungselektronik nach Anspruch 11,
**dadurch gekennzeichnet, dass**
die Steuereinheit (7) dazu vorgesehen ist, nach dem Aufbau einer Internetverbindung ein Auslesen von Daten über den aufsummierten Wert der Darstellungszeiten der Werbebeiträge aus dem Speicher (11 c) sowie eine Übertragung dieser Daten über die ISDN-Telefonleitung (10) an den Werbeanbieter zu initiieren und/oder es einen nichtflüchtigen Speicher (11d) für eine Geräteidentifikationsnummer aufweist und die Steuereinheit (7) dazu vorgesehen ist, nach dem Aufbau einer Internetverbindung ein Auslesen von Daten über den aufsummierten Wert der Darstellungszeit der Werbebeiträge und der Geräteidentifikationsnummer sowie eine Übertragung dieser Daten über die ISDN-Telefonleitung (10) an den Werbeanbieter zu initiieren.

13. Gerät der Unterhaltungselektronik nach einem der vorhergehenden Ansprüche,
**dadurch gekennzeichnet, dass**
es einen nichtflüchtigen Speicher (11e) zur Abspeicherung eines über die ISDN-Telefonleitung (10) aus dem Internet empfangenen Überwachungsprogrammes aufweist, unter dessen Verwendung die Steuereinheit (7) die Darstellung der Werbebeiträge steuert.

14. Gerät der Unterhaltungselektronik nach einem der vorhergehenden Ansprüche,
**dadurch gekennzeichnet, dass**
es ein Fernsehgerät, ein Videorecorder, ein Satellitenempfangsgerät oder ein DVD-Spieler ist.

## Claims

1. Electronic entertainment device that has a receiver section (2), a station memory (6), an image signal processing level (3), a control unit (7), an operating unit (9) and a non-volatile memory (11, 11a, 11b) in which are stored television station-independent data, which stores information about advertisement display time periods and/or the information about the advertisement display time periods including a piece of information about a duration for which an advertisement is displayed on an image display unit (4),
**characterised in that**
the non-volatile memory is set up to store a piece of information about a target time period, which is a target for the total display time of the advertisement on the image display unit (4), and/or set up to record a piece of online address information of an advertisement provider, and **in that** the non-volatile memory is set up to record a sum value of the actual display time of the advertisement as collected by the time collection device (7), and **in that** the control unit (7) is set up to compare the information corresponding to the target time period with the sum value of the actual display time and then, if the sum value of the actual display time is greater than or equal to the target time period, delete the information about the advertisement display time periods.

2. Electronic entertainment device according to claim 1,
**characterised in that**
it has an image display unit or can be connected to an image display unit.

3. Electronic entertainment device according to claim 1 or 2,
**characterised in that**
it furthermore has time collection devices (7) that are set up to collect the display time of the advertisements on the image display device (4).

4. Electronic entertainment device according to one of the previous claims,
**characterised in that**
the non-volatile memory (11, 11a) is a ROM, a RAM, a flash memory or a hard disk.

5. Electronic entertainment device according to one of the previous claims,
**characterised in that**
it has a signal dropout detector (5) and the control unit (7) controls a readout of data from the non-volatile memory (11) and the display of them on the image display unit (4) in case of identified signal dropout, and/or the control unit (7) controls a readout of data from the non-volatile memory (11, 11a) and the display of them on the image display unit (4) in case of identification of a selection of a programme from the station memory (6) that is not provided with station data.

6. Electronic entertainment device according to one of the previous claims,
**characterised in that**
the control unit (7) controls a readout of data from the non-volatile memory (11, 11a) and its display on the image display unit (4) after identification of an actuation instruction.

7. Electronic entertainment device according to one of the previous claims,
**characterised in that**
the data taken from the internet are automatically updated after an internet connection is established.

8. Electronic entertainment device according to one of the previous claims,
**characterised in that**
the data taken from the internet are only updated after an operating instruction has been given by means of the operating unit (8, 9).

9. Electronic entertainment device according to one of the previous claims,
**characterised in that**
the operating unit (8, 9) has operating elements, by means of which it is possible to browse between the saved data corresponding to individual images.

10. Electronic entertainment device according to one of the previous claims,
**characterised in that**
the information about the advertisement display time periods includes a piece of information about time intervals between successive advertisement displays on the image display unit (4).

11. Electronic entertainment device according to one of the previous claims,
**characterised in that**
the control unit (7) is set up to automatically initiate the establishment of an internet connection over the ISDN telephone line (10) after identification of an actuation instruction.

12. Electronic entertainment device according to claim 11,
**characterised in that**
the control unit (7) is set up to initiate a readout of data about the sum value of the display times of the advertisements from the memory (11c) as well as a transmission of these data over the ISDN telephone line (10) to the advertisement provider after an internet connection has been established, and/or **in that** it has a non-volatile memory (11d) for a device identification number and the control unit (7) is set up to initiate a readout of data about the sum value of the display time of the advertisement and the device identification number as well as a transmission of these data over the ISDN telephone line (10) to the advertisement provider after an internet connection has been established.

13. Electronic entertainment device according to one of the previous claims,
**characterised in that**
it has a non-volatile memory (11e) for recording a monitoring programme received from the internet over the ISDN telephone line (10), by using which the control unit (7) controls the display of advertisements.

14. Electronic entertainment device according to one of the previous claims,
**characterised in that**
it is a television set, a video recorder, a satellite receiver or a DVD player.

## Revendications

1. Appareil d'électronique de divertissement, qui présente une partie de réception (2), une mémoire d'émetteur (6), un niveau de traitement de signal d'image (3), une unité de commande (7), une unité d'opération (9) et une mémoire (11, 11a, 11 b) non volatile, dans laquelle sont stockées des données indépendantes de l'émetteur de télévision,
qui sert au stockage d'informations sur des intervalles de temps de présentation de publicité et/ou lesquelles informations sur les intervalles de temps pour la représentation de publicité contiennent une information sur une durée, pour laquelle une présentation de publicité s'effectue sur une unité d'affichage d'image (4),
**caractérisé en ce que** la mémoire non volatile est prévue pour le stockage d'une information sur un intervalle de temps prévu, lequel est prévu pour une durée de présentation globale de consigne des articles publicitaires sur l'unité d'affichage d'image (4) et/ou qui est prévu pour le stockage d'une information d'adresses en ligne d'un prestataire de publicité,
et **caractérisé en ce que** la mémoire non volatile est prévue pour le stockage d'une valeur cumulée du temps de présentation réel, saisi à l'aide des moyens d'enregistrement de temps (7), des articles publicitaires, **en ce que** l'unité de commande (7) est prévue pour la comparaison de l'information correspondant à l'intervalle de temps prévu avec l'information correspondant à la valeur cumulée du temps de présentation réel et, lorsque la valeur cumulée du temps de présentation réel est supérieure ou égale à l'intervalle de temps prévu, supprime l'information sur les intervalles de temps de présentation de publicité.

2. Appareil d'électronique de divertissement selon la revendication 1,
**caractérisé en ce**
**qu'**il présente une unité d'affichage d'image ou peut être raccordé à une unité d'affichage d'image.

3. Appareil d'électronique de divertissement selon la revendication 1 ou 2,
**caractérisé en ce**
**qu'**il présente également des moyens d'enregistrement de temps (7), qui sont prévus pour l'enregistrement du temps de présentation des articles publicitaires sur l'unité d'affichage d'image (4).

4. Appareil d'électronique de divertissement selon l'une des revendications précédentes,
**caractérisé en ce que**
la mémoire (11, 11 a) non volatile est une ROM, une RAM, une mémoire flash ou une mémoire de disque dur.

5. Appareil d'électronique de divertissement selon l'une des revendications précédentes,
**caractérisé en ce**
**qu'**il présente un détecteur de défaillance de signal (5) et, en cas de défaillance de signal détectée, l'unité de commande (7) commande une extraction de données de la mémoire (11) non volatile et leur présentation sur l'unité d'affichage d'image (4) et/ou l'unité de commande (7) commande, en cas de reconnaissance d'un choix d'un emplacement de mémoire, non occupé avec des données d'émetteur, de la mémoire d'émetteur (6) une extraction de données de la mémoire (11, 11a) non volatile et leur présentation sur l'unité d'affichage d'image (4).

6. Appareil d'électronique de divertissement selon l'une des revendications précédentes,
**caractérisé en ce que**
l'unité de commande (7) commande, après l'identification d'une instruction d'enclenchement, une extraction de données de la mémoire (11, 11 a) non volatile et leur présentation sur l'unité d'affichage d'image (4).

7. Appareil d'électronique de divertissement selon l'une des revendications précédentes,
**caractérisé en ce que**
les données déduites d'Internet sont actualisées automatiquement après l'établissement d'une liaison Internet.

8. Appareil d'électronique de divertissement selon l'une des revendications précédentes,
**caractérisé en ce que**
les données déduites d'Internet ne sont mises à jour qu'après l'entrée d'une instruction de commande au moyen de l'unité d'opération (8, 9).

9. Appareil d'électronique de divertissement selon l'une des revendications précédentes,
**caractérisé en ce que**
l'unité d'opération (8, 9) présente des éléments d'opération, au moyen desquels on peut effectuer un défilement entre les données mémorisées et correspondant à des images individuelles.

10. Appareil d'électronique de divertissement selon l'une des revendications précédentes,
**caractérisé en ce que**
les informations sur les intervalles de temps de représentation de publicité contiennent une information sur des intervalles de temps entre des présentations de publicité consécutives sur l'unité d'affichage d'image (4).

11. Appareil d'électronique de divertissement selon l'une des revendications précédentes,
**caractérisé en ce que**
l'unité de commande (7) est prévue pour amorcer après la reconnaissance d'une instruction d'enclenchement ou à des intervalles réguliers automatiquement l'établissement d'une liaison Internet par la ligne de téléphone ISDN (10).

12. Appareil d'électronique de divertissement selon la revendication 11,
**caractérisé en ce que**
l'unité de commande (7) est prévue pour initier après l'établissement d'une liaison Internet une extraction de données sur la valeur cumulée des temps de présentation des articles publicitaires de la mémoire (11 c) et une transmission de ces données par la ligne de téléphone ISDN (10) au prestataire de publicité et/ou l'appareil présente une mémoire non volatile (11d) pour un numéro d'identification d'appareil et l'unité de commande (7) est prévue pour initier après l'établissement d'une liaison Internet une extraction de données sur la valeur cumulée du temps de présentation des articles publicitaires et du numéro d'identification d'appareil ainsi qu'une transmission de ces données par la ligne de téléphone ISDN (10) au prestataire de publicité.

13. Appareil d'électronique de divertissement selon l'une des revendications précédentes,
**caractérisé en ce**
**qu'**il présente une mémoire (11e) non volatile pour le stockage d'un programme de contrôle reçu d'Internet par la ligne de téléphone ISDN (10), programme avec l'utilisation duquel l'unité de commande (7) commande la présentation des articles publicitaires.

14. Appareil d'électronique de divertissement selon l'une des revendications précédentes,
**caractérisé en ce**
**qu'**il s'agit d'un appareil de télévision, d'un magnétoscope, d'un appareil de réception par satellite ou d'un lecteur de DVD.
